# EUROPÄISCHE PATENTSCHRIFT

(11) **EP 2 124 358 B1**
(45) Veröffentlichungstag und Bekanntmachung des Hinweises auf die Patenterteilung: **02.12.2015**
(21) Anmeldenummer: 09006170.6
(22) Anmeldetag: 06.05.2009
(51) Int. Cl.: H04B 10/112

(54) **Vorrichtung und Verfahren zur kabellosen, punktförmigen Datenübertragung**
Device and method for wireless punctiform data transfer
Dispositif et procédé de transmission de données sans fil sous forme de points

(30) Priorität: 23.05.2008 DE 102008024813
(43) Veröffentlichungstag der Anmeldung: 25.11.2009
(73) Patentinhaber: Deutsches Zentrum für Luft- und Raumfahrt e.V., 51147 Köln (DE)
(72) Erfinder: Mayer zu Hörste, Michael Dr., 38116 Braunschweig (DE); Strang, Thomas Dr., 82287 Jesenwang (DE); Kammann, Jens, 80638 München (DE)
(74) Vertreter: Gerstein, Hans Joachim

(56) Entgegenhaltungen:
- WO-A-98/57451
- WO-A-2004/057541
- US-A1- 2002 141 011
- US-A1- 2007 031 151
- US-B1- 6 347 001

## Beschreibung

Die Erfindung betrifft eine Vorrichtung zur kabellosen, punktförmigen Datenübertragung mit mindestens einer Sendeeinheit zum Senden eines punktförmigen Datenübertragungssignals und mit mindestens einer Empfangseinheit zum Empfangen eines punktförmigen Datenübertragungssignals.

Die Erfindung betrifft ebenfalls ein Verfahren zur kabellosen, punktförmigen Datenübertragung mit Senden eines punktförmigen Datenübertragungssignals mittels einer Sendeeinheit und Empfangen eines punktförmigen Datenübertragungssignals mittels einer Empfangseinheit.

Kommunikation ist ein wichtiger Bestandteil unserer modernen Gesellschaft. Dabei steht nicht mehr nur die Kommunikation zwischen den Menschen allein im Vordergrund. Vielmehr entwickelte sich in den letzten Jahren das Bedürfnis, dass auch technische Einrichtungen untereinander in Kommunikation stehen, um z.B. Prozessabläufe oder ähnliche Dinge besser überwachen zu können. So sei z.B. auf die Fahrzeug-zu-Fahrzeug-Kommunikation (car-to-car-communication) hingewiesen, mit deren Hilfe Fahrzeuge untereinander Betriebsdaten austauschen, um so z.B. auf unerwartete Ereignisse schneller reagieren zu können oder ganz allgemein die Verkehrssituation überwachen zu können.

Eine solche Kommunikation erfolgt heutzutage auch bei schienengebundenen Fahrzeugen, um den einzelnen Fahrzeugen die für die Sicherung der Fahrt erforderlichen Daten von einer Zentrale aus übermitteln zu können. Dies ist insbesondere unter dem Hintergrund zu sehen, dass es ein kontinuierliches Streben danach gibt, die Zugsicherung größtenteils zu automatisieren, damit auf streckenseitige Infrastrukturen, die zur Zugsicherung verwendet werden, verzichtet werden können, um gerade Nebenstrecken rentabler zu machen. Es ist daher ein Ziel, die Zugsicherung auf das Fahrzeug zu verlegen, da streckenseitige Zugsicherungsmaßnahmen in der Regel teurer und wartungsaufwendiger sind.

Zur Übertragung von Daten an schienengebundene Fahrzeuge sind aus dem Stand der Technik eine Reihe von Möglichkeiten bekannt. Da ist zum einen die punktförmige Zugbeeinflussung zu nennen, bei der an diskreten Punkten auf der Strecke Einrichtungen im Gleisbett (Infrastrukturen) angeordnet sind, die an einen vorbeifahrenden schienengebundenen Fahrzeugverband Signale bzw. Daten übertragen können. Eine solche Einrichtung kann z.B. eine induktive Zugsicherung (Indusi) sein, bei im Gleis sogenannte Gleismagneten verankert sind. Am Triebfahrzeug befindet sich eine Sendespule, die von einem Schwingkreis mit den drei überlagerten Frequenzen 500, 1000 und 2000 Hz gespeist wird, wobei die unterschiedlichen Kreisfrequenzen unterschiedlichen Informationen zugeordnet sind. Die Gleismagneten werden in Abhängigkeit eines bestimmten Streckensignals aktiviert und übertragen, unter Verwendung einer auf die Frequenzen abgestimmten Resonanzspule, ein entsprechendes Signal an das Triebfahrzeug. Bei Nichtbeachten des entsprechenden Signals wird eine Zwangsbremsung des Fahrzeugverbandes durchgeführt.

Eine andere Form der Datenübertragung im Schienenverkehr ist die sogenannte Linienzugbeeinflussung. Dabei handelt es sich um ein Zugsicherungssystem, bei dem die Fahrzeuge kontinuierlich mittels eines zwischen den schienenverlegten Kabelpaares, dem sogenannten Linienleiter, mit einer Zentrale Daten austauschen, um die Strecke zu überwachen. Nachteilig ist die Verwendung einer Linienzugbeeinflussung insbesondere deshalb, weil eine Installation und die nachfolgende Wartung erhebliche Kosten verlangt und sich deshalb für Nebenstrecken nicht rentiert. Außerdem weist die Linienzugbeeinflussung umfangreiche Ausrüstung an der Strecke auf, die für Beschädigungen oder Zerstörungen anfällig.

In einer weiteren Form der Datenübertragung ist die Kommunikation per Funk, bei der auf dem Fahrzeug eine entsprechende Sende- und Empfangseinheit angeordnet ist, die zum Empfangen und Senden der entsprechenden Funksignale eingerichtet ist. Die Funkkommunikation könnte dabei mittels der bekannten GSM-Technologie oder anderer Funkstandards erfolgen. Die Funktechnologie hat insbesondere den Vorteil, dass sie sehr günstig in der Anschaffung und sehr einfach in der Installation und Wartung ist. Jedoch hat die Funktechnologie den entscheidenden Nachteil, dass sie durch äußere Einflüsse, wie z.B. Abstrahlungen oder Absorptionen, sehr störanfällig ist und somit in der Regel den Sicherheitsstandards bei der Kommunikation im Schienenverkehr nicht genügt. Insbesondere in Tunnels ist die Kommunikation per Funk nicht zuverlässig.

So sind aus der US 2002/0141011 A1, aus der US 2007/0031151 A1 und der US 6,347,001 B1 Vorrichtungen bekannt, die einen Laserstrahl zur Datenkommunikation auf einen Empfänger fokussieren. Bei einer relativen Bewegung zwischen dem Sender und dem Empfänger wird dies detektiert, so dass der Laserstrahl derart abgelenkt wird, dass er weiter auf den Empfänger fokussiert bleibt. Diese Systeme sind jedoch für einen über weite Strecken gehenden Datenaustausch nicht geeignet, da eine direkte Sichtverbindung bestehen muss.

Aus der WO 98/37451 ist ein Laserlinksystem bekannt, das in Richtung eines Empfängers eine Strahlenkeule aussendet. Um nun bei einer Bewegung des Empfängers die Datenkommunikation aufrecht zu erhalten, werden die Sender derart angeordnet, dass sich in einem bestimmten Abdeckungsbereich die Empfangsgebiete überlappen. Hierfür bedarf es jedoch einer Vielzahl von möglichen Sendeeinheiten, wenn ein großes Gebiet abgedeckt werden soll.

Schließlich offenbart noch die WO 2004/057541 A1 eine Kommunikationseinrichtung für Kraftfahrzeuge, wobei an einem Kraftfahrzeuggehäuse ein Infrarotsender bzw. Empfänger angeordnet ist, der mit einem externen Sender bzw. Empfangsgerät kommunizieren kann, beispielsweise bei Maut- und Gebührensystemen. Eine lückenlose Datenübertragung kann mit einem solchen System ebenfalls nicht gewährt werden.

Im Hinblick darauf ist es Aufgabe der vorliegenden Erfindung, eine Vorrichtung und ein Verfahren anzugeben, mit dem Daten unterbrechungsfrei, sicher und verlässlich bei mindestens einem sich bewegenden Objekt übertragen werden können.

Die Aufgabe wird mit der Vorrichtung der eingangs genannten Art erfindungsgemäß dadurch gelöst, dass die Vorrichtung eine Nachführlogik aufweist, die zum Fokussieren des punktförmigen Datenübertragungssignals auf die Empfangseinheit und zum Nachführen des punktförmigen Datenübertragungssignals in Abhängigkeit einer Relativbewegung zwischen der mindestens einen Sende- und der mindestens einen Empfangseinheit vorgesehen ist.

Die Vorrichtung besteht aus einer Sendeeinheit und einer Empfangseinheit, wobei die Sendeeinheit zum Senden eines Datenübertragungssignals und die Empfangseinheit zum Empfangen eines solchen ausgesendeten Datenübertragungssignals eingerichtet sind. Das Datenübertragungssignal ist dabei ein Signal, welches kabellos übertragen werden kann, d.h. z.B. mittels Funk oder wie in einer besonderen Ausgestaltung der Erfindung vorgesehen, mittels Lasertechnik. Des Weiteren ist das Datenübertragungs-signal punktförmig, d.h. es handelt sich hierbei um ein gerichtetes Signal, welches sich nicht kubisch im Raum ausbreitet, sondern ausschließlich linear. Damit die Empfangseinheit das von der Sendeeinheit ausgesendete gerichtete Signal empfangen kann, muss das Signal auf die Empfangseinheit ausgerichtet werden. Erfindungsgemäß schlägt die vorliegende Vorrichtung dazu vor, dass mittels einer Nachführlogik das gerichtete Datenübertragungssignal zunächst auf die Empfangseinheit fokussiert und anschließend nachgeführt wird, wenn zwischen der Sende- und der Empfangseinheit eine Relativbewegung existiert, so dass bei einer Relativbewegung zwischen den beiden Einheiten das gerichtete Signal immer auf die Empfangseinheit ausgerichtet ist.

Ein solches gerichtetes Datenübertragungssignal kann z.B. mit Hilfe der Lasertechnik erzeugt werden, indem die Sendeeinheit zum Erzeugen eines Laserstrahls vorgesehen ist, indem die zu übertragenden Daten enthalten sind. Die Empfangseinheit ist des Weiteren zum Empfangen eines solchen Laserstrahls vorgesehen, um die enthaltenen Daten zu extrahieren.

Die Vorrichtung ist besonders dann sinnvoll, wenn Daten von einem ortsfesten Sender zu einem Empfänger übertragen werden sollen, der sich auf einem beweglichen Objekt, wie z.B. einem Fahrzeug, befindet. Während der Sender an sich feststeht, muss das auszusendende Signal nachgeführt werden, d.h. die Relativbewegung zwischen dem ortsfesten Sender und dem beweglichen Empfänger muss ausgeglichen werden, damit das Signal auf den Empfänger trifft. Dazu wird die Richtung des auszusendenden gerichteten Datenübertragungssignals an die Bewegung des Empfängers angepasst.

Denkbar ist aber auch, dass der Empfänger ortsfest ist und der Sender auf einem beweglichen Objekt angeordnet ist. Auch in dieser Kombination muss der Sender die Relativbewegung zwischen Sender und Empfänger mittels der Nachführlogik entsprechend ausgleichen, dass das gerichtete Datenübertragungssignal auf den Empfänger trifft. Das Nachführen ist dabei deshalb notwendig, da sich das Signal ausschließlich linear in eine bestimmte Richtung ausbreitet und nicht kubisch im ganzen Raum.

Ganz besonders vorteilhaft ist es, wenn ortsfeste Sende- und/oder Empfangseinheiten entlang einer spurbindenden Strecke, wie z.B. einer Schienenstrecke immer angeordnet sind. Auf entsprechenden Fahrzeugen, die die spurbindende Strecke befahren, werden ebenfalls entsprechende Sende- und/oder Empfangseinheiten angeordnet, so dass die Fahrzeuge über diese Einheiten mit den ortsfesten Sende- und/oder Empfangseinheiten mittels des gerichteten Datenübertragungssignals Daten austauschen können.

Werden an einer solchen spurbindenden Streckenführung, wie z.B. einer Schienenstrecke oder ähnlichem, in geeignetem Abstand solche ortsfesten Sende- und/oder Empfangseinheiten angeordnet, so können Fahrzeuge, die diese Strecke befahren und mit einem solchen System ausgerüstet sind, während der gesamten Zeit unterbrechungsfrei kommunizieren. Dazu müssen die ortsfesten Einheiten in einem derartigen Abstand angeordnet sein, dass immer mindestens eine ortsfeste Sende- und/oder Empfangseinheit für die Kommunikation zur Verfügung steht. D.h. mit anderen Worten, auf der gesamten Strecke ist an jedem Punkt immer mindestens eine ortsfeste Sende- und/oder Empfangseinheit für die Übertragung des Datenübertragungssignals verfügbar.

Vorteilhafter Weise werden die ortsfesten Sende- und/oder Empfangseinheiten an einer Tunneldecke entlang einer schienengebundenen Streckenführung installiert, wobei die diese Strecke befahrenden Fahrzeuge auf ihrer Oberseite entsprechend Einheiten zur Datenübertragung aufweisen. Dadurch kann erreicht werden, dass auch innerhalb eines Tunnels eine entsprechende Kommunikation mit dem Fahrzeug sicher und unterbrechungsfrei garantiert werden kann.

Die Aufgabe wird auch mit dem Verfahren der eingangs genannten Art erfindungsgemäß gelöst durch Fokussieren des gerichteten Datenübertragungssignals auf die Empfangseinheit und nachführen des gerichteten Datenübertragungssignals in Abhängigkeit einer Relativbewegung zwischen Sende- und Empfangseinheit.
Vorteilhafte Ausgestaltungen finden sich in den entsprechenden Unteransprüchen.

Die vorliegende Erfindung wird anhand der beigefügten Zeichnung beispielhaft näher erläutert. Es zeigt:

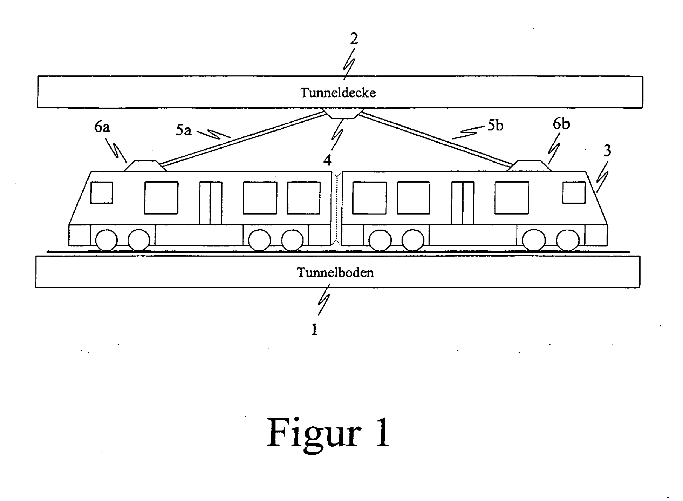

- Figur 1: - skizzenhafte Darstellung einer Datenübertragung mittels der vorliegenden Erfindung.

Figur 1 zeigt eine skizzenhafte Darstellung der Datenübertragung mittels der vorliegenden Erfindung. In einem Tunnel bestehend aus einem Tunnelboden 1 und einer Tunneldecke 2 bewegt sich ein schienengebundenes Fahrzeug 3, das mit einer Zentrale (hier nicht dargestellt) zwecks Datenaustauschs in Verbindung steht. Dieser Datenaustausch kann dabei den Zweck haben, die Zugsicherung durchzuführen oder z.B. ein autonomes Fahren des Zuges zu ermöglichen. An der Tunneldecke 2 befindet sich eine ortsfeste Sende- und/oder Empfangseinheit 4, die zum Senden eines gerichteten Datenübertragungssignals 5a, 5b und zum Empfangen eines solchen Datenübertragungssignals 5a, 5b vorgesehen ist. Das schienengebundene Fahrzeug 3 weist ebenfalls entsprechende Sende- und/oder Empfangseinheiten 6a, 6b auf, um mit der ortsfesten Sende- und/oder Empfangseinheiten 4 an der Tunneldecke 2 in Kommunikation stehen zu können.

Während sich nun das schienengebundene Fahrzeug 3 durch den Tunnel in eine Richtung bewegt, verändert sich dabei kontinuierlich die relative Position der an dem Fahrzeug angebrachten Sende- und/oder Empfangseinheiten 6a, 6b zu der an der Tunneldecke 2 ortsfesten angeordneten Sende- und/oder Empfangseinheit 4. Da es sich bei den Datenübertragungssignalen 5a, 5b um gerichtete Datenübertragungssignale handelt, müssen beim Senden dieser Signale diese immer auf den entsprechenden Empfänger ausgerichtet werden. Die Nachführlogik, die in diesem Ausführungsbeispiel in den Sende- und/oder Empfangseinheiten 4, 6a, 6b angeordnet ist, gleicht dabei die Relativbewegung zwischen der ortsfesten Sende- und/oder Empfangseinheit 4 und den beweglichen Sende- und/oder Empfangseinheiten 6a, 6b derart aus, dass das gerichtete gesendete Datenübertragungssignal 5a ,5b immer auf den entsprechenden Empfänger trifft.

Damit wird es möglich, dass sich das schienengebundene Fahrzeug 3 durch den Tunnel bewegt und dabei kontinuierlich eine gerichtete Datenübertragungsverbindung zu einem entsprechenden ortsfesten Sender und Empfänger aufrechterhalten kann.

Die Datenübertragung ist in diesem Ausführungsbeispiel in Figur 1 bidirektional ausgelegt, d.h. sowohl die ortsfeste Einheit 4 als auch die auf dem schienengebundenen Fahrzeug 3 angeordnete Einheit 6a, 6b beinhaltet jeweils sowohl eine Sendeeinheit als auch eine Empfangseinheit. Somit kann das schienengebundene Fahrzeug 3 nicht nur Daten von einer Zentrale (hier nicht dargestellt), empfangen, sondern auch an diese zurücksenden. Es versteht sich dabei von selbst, dass die auf dem schienengebundenen Fahrzeug 3 angeordneten Übertragungseinheiten zum Senden ebenfalls eine entsprechende Nachführlogik nach der vorliegenden Erfindung aufweisen.

Durch eine paarweise Vorwärts-/Rückwärtsanordnung kann eine Unterbrechung auf einem der Kanäle kompensiert werden. Hierdurch wird die für die höheren Sicherheitsstufen (SIL3 und 4) notwendige Mehrkanaligkeit erreicht werden: wenn eine der beiden Richtungen am Ende der Sichtbarkeit ist und einer neuer Empfangspunkt "eingefangen" werden muss, steht noch immer der zweite Kanal zur Verfügung. Durch die Anordnung mehrerer Sende- und/oder Empfängergruppen an der Tunneldecke 2 und auf dem schienengebundenen Fahrzeug 3 kann die für die notwendige Verfügbarkeit erforderliche Redundanz aufgebaut werden. So ist es möglich, wenn an der Tunneldecke in bestimmten Abständen mehrere solche Sende- und/oder Empfängergruppen angeordnet werden, dass während der gesamten Zeit des Befahrens des Tunnels eine Datenübertragung von dem Fahrzeug 3 zu den entsprechenden ortsfesten Empfängergruppen 4 möglich ist, da immer mindestens eine Sende- und/oder Empfängergruppe in Reichweite für die Datenübertragung ist.

## Patentansprüche

1. Vorrichtung zur Datenübertragung zwischen einem Schienenfahrzeug (3) und einer Zentrale mit mindestens einer ortsfesten Sende- und/oder Empfangseinheit (4) zum kabellosen Senden und/oder Empfangen eines gerichteten Datenübertragungssignals (5a, 5b) zur Zugsicherung oder autonomen Fahrens und mit mindestens einer objektfesten Sende- und/oder Empfangseinheit (6a, 6b) zum kabellosen Senden und/oder Empfangen des gerichteten Datenübertragungssignals (5a, 5b), die an dem Schienenfahrzeug (3) angeordnet ist, wobei die Vorrichtung eine Nachführlogik aufweist, die zum Fokussieren des gerichteten Datenübertragungssignals (5a, 5b) auf die Empfangseinheit (4, 6a, 6b) und zum Nachführen des gerichteten Datenübertragungssignals (5a, 5b) in Abhängigkeit einer Relativbewegung zwischen der mindestens einen ortsfesten Sende- und/oder Empfangseinheit und der mindestens einen objektfesten Sende- und/oder Empfangseinheit vorgesehen ist, und wobei eine Mehrzahl von ortsfesten Sende- und/oder Empfangseinheiten (4) entlang einer Schienenstrecke derart angeordnet sind, dass an jedem Punkt auf der Schienenstrecke mindestens eine ortsfeste Sende- und/oder Empfangseinheit (4) für eine unterbrechungsfreie Übertragung des gerichteten Datenübertragungssignals (5a, 5b) verfügbar ist.

2. Vorrichtung nach Anspruch 1, **dadurch gekennzeichnet, dass** die Vorrichtung zur gerichteten Datenübertragung mittels Lasertechnik eingerichtet ist.

3. Vorrichtung nach einem der vorhergehenden Ansprüche, **dadurch gekennzeichnet, dass** die ortsfesten Sende- und/oder Empfangseinheiten (4) entlang einer Tunneldecke (2) der Schienenstrecke und die objektfesten Sende-und/oder Empfangseinheiten (6a, 6b) auf der oberen Seite des Schienenfahrzeuges (3) angeordnet sind.

4. Verfahren zur Datenübertragung zwischen einem Schienenfahrzeug (3) und einer Zentrale mit Senden eines gerichteten Datenübertragungssignals (5a, 5b) mittels einer Sendeeinheit (4, 6a, 6b) und Empfangen eines gerichteten Datenübertragungssignals (5a, 5b) mittels einer Empfangseinheit (4, 6a, 6b) zur Zugsicherung oder autonomen Fahrens, **gekennzeichnet durch** Fokussieren des gerichteten Datenübertragungssignals (5a, 5b) auf die Empfangseinheit (4, 6a, 6b) und Nachführen des gerichteten Datenübertragungssignals (5a, 5b) in Abhängigkeit einer Relativbewegung zwischen Sende- und/oder Empfangseinheit (4, 6a, 6b), wobei eine Mehrzahl von ortsfesten Sende- und/oder Empfangseinheiten (4) entlang einer Schienenstrecke derart angeordnet sind, dass an jedem Punkt auf der Schienenstrecke mindestens eine ortsfeste Sende- und/oder Empfangseinheit (4) für eine unterbrechungsfreie Übertragung des gerichteten Datenübertragungssignals (5a, 5b) verfügbar ist.

5. Verfahren nach Anspruch 6, **gekennzeichnet durch** Übertragen des gerichteten Datenübertragungssignals (5a, 5b) mittels Lasertechnik.

## Claims

1. Apparatus for transmitting data between a rail vehicle (3) and a control centre, having at least one stationary transmitting and/or receiving unit (4) for wirelessly transmitting and/or receiving a directional data transmission signal (5a, 5b) for train protection or autonomous driving and having at least one transmitting and/or receiving unit (6a, 6b) which is fixed to an object, is intended to wirelessly transmit and/or receive the directional data transmission signal (5a, 5b) and is arranged on the rail vehicle (3), the apparatus having tracking logic which is intended to focus the directional data transmission signal (5a, 5b) onto the receiving unit (4, 6a, 6b) and to track the directional data transmission signal (5a, 5b) on the basis of a relative movement between the at least one stationary transmitting and/or receiving unit and the at least one transmitting and/or receiving unit which is fixed to an object, and a plurality of stationary transmitting and/or receiving units (4) being arranged along a railway line in such a manner that at least one stationary transmitting and/or receiving unit (4) is available at each point on the railway line for uninterrupted transmission of the directional data transmission signal (5a, 5b).

2. Apparatus according to Claim 1, **characterized in that** the apparatus is set up for directional data transmission by means of laser technology.

3. Apparatus according to one of the preceding claims, **characterized in that** the stationary transmitting and/or receiving units (4) are arranged along a tunnel ceiling (2) of the railway line and the transmitting and/or receiving units (6a, 6b) which are fixed to an object are arranged on the top side of the rail vehicle (3).

4. Method for transmitting data between a rail vehicle (3) and a control centre, comprising transmission of a directional data transmission signal (5a, 5b) by means of a transmitting unit (4, 6a, 6b) and reception of a directional data transmission signal (5a, 5b) by means of a receiving unit (4, 6a, 6b) for train protection or autonomous driving, **characterized by** focusing of the directional data transmission signal (5a, 5b) onto the receiving unit (4, 6a, 6b) and tracking of the directional data transmission signal (5a, 5b) on the basis of a relative movement between the transmitting and/or receiving unit (4, 6a, 6b), a plurality of stationary transmitting and/or receiving units (4) being arranged along a railway line in such a manner that at least one stationary transmitting and/or receiving unit (4) is available at each point on the railway line for uninterrupted transmission of the directional data transmission signal (5a, 5b).

5. Method according to Claim 6, **characterized by** transmission of the directional data transmission signal (5a, 5b) by means of laser technology.

## Revendications

1. Dispositif de transmission de données entre un véhicule ferroviaire (3) et une centrale, comprenant au moins une unité d'émission et/ou de réception (4) en position fixe destinée à émettre et/ou recevoir sans fil un signal de transmission de données (5a, 5b) directionnel de protection des trains ou de conduite autonome, et comprenant au moins une unité d'émission et/ou de réception (6a, 6b) montée à demeure sur l'objet destinée à émettre et/ou recevoir sans fil le signal de transmission de données (5a, 5b) directionnel, laquelle est montée sur le véhicule ferroviaire (3), le dispositif possédant une logique d'asservissement qui est conçue pour concentrer le signal de transmission de données (5a, 5b) directionnel sur l'unité de réception (4, 6a, 6b) et pour asservir le signal de transmission de données (5a, 5b) directionnel en fonction d'un mouvement relatif entre ladite unité d'émission et/ou de réception en position fixe et ladite unité d'émission et/ou de réception montée à demeure sur l'objet, et une pluralité d'unités d'émission et/ou de réception (4) en position fixe étant disposées le long d'un tronçon de voie ferrée de telle sorte qu'au moins une unité d'émission et/ou de réception (4) en position fixe est disponible à chaque point sur le tronçon de voie ferrée pour une transmission ininterrompue du signal de transmission de données (5a, 5b) directionnel.

2. Dispositif selon la revendication 1, **caractérisé en ce que** le dispositif est conçu pour une transmission de données directionnelle au moyen d'une technique à laser.

3. Dispositif selon l'une des revendications précédentes, **caractérisé en ce que** les unités d'émission et/ou de réception (4) en position fixe sont disposées le long d'un plafond de tunnel (2) du tronçon de voir ferrée et les unités d'émission et/ou de réception (6a, 6b) montées à demeure sur l'objet sont disposées sur le coté supérieur du véhicule ferroviaire (3).

4. Procédé de transmission de données entre un véhicule ferroviaire (3) et une centrale, comprenant l'émission d'un signal de transmission de données (5a, 5b) directionnel au moyen d'une unité d'émission (4, 6a, 6b) et la réception d'un signal de transmission de données (5a, 5b) directionnel au moyen d'une unité de réception (4, 6a, 6b) en vue de la protection des trains ou d'une conduite autonome, **caractérisé par** une concentration du signal de transmission de données (5a, 5b) directionnel sur l'unité de réception (4, 6a, 6b) et l'asservissement du signal de transmission de données (5a, 5b) directionnel en fonction d'un mouvement relatif entre les unités d'émission et/ou de réception (4, 6a, 6b), une pluralité d'unités d'émission et/ou de réception (4) en position fixe étant disposées le long d'un tronçon de voie ferrée de telle sorte qu'au moins une unité d'émission et/ou de réception (4) en position fixe est disponible à chaque point sur le tronçon de voie ferrée pour une transmission ininterrompue du signal de transmission de données (5a, 5b) directionnel.

5. Procédé selon la revendication 6, **caractérisé par** la transmission du signal de transmission de données (5a, 5b) directionnel au moyen d'une technique à laser.
